# EUROPÄISCHE PATENTSCHRIFT

(11) **EP 1 399 240 B1**
(45) Veröffentlichungstag und Bekanntmachung des Hinweises auf die Patenterteilung: **22.08.2007**
(21) Anmeldenummer: 02780904.5
(22) Anmeldetag: 18.06.2002
(51) Int. Cl.: B01D 46/24, B01D 36/00

(54) **FILTERELEMENT MIT DRAINAGEROHR**
FILTER ELEMENT WITH A DRAINAGE TUBE
ELEMENT FILTRANT DOTE D'UN TUBE DE DRAINAGE

(30) Priorität: 27.06.2001 DE 10131108
(43) Veröffentlichungstag der Anmeldung: 24.03.2004
(73) Patentinhaber: MANN+HUMMEL GmbH, 71638 Ludwigsburg (DE)
(72) Erfinder: EPPEL, Otto, 67346 Speyer (DE); HEIKAMP, Wolfgang, 67165 Waldsee (DE); ZÜRKER, Markus, 67373 Dudenhofen (DE)
(86) Internationale Anmeldenummer: PCT/EP2002/006710
(87) Internationale Veröffentlichungsnummer: WO 2003/002233

(56) Entgegenhaltungen:
- EP-A- 0 278 772
- EP-A- 0 806 564
- PATENT ABSTRACTS OF JAPAN vol. 1995, no. 11, 26. Dezember 1995 (1995-12-26) & JP 07 217577 A (HITACHI LTD), 15. August 1995 (1995-08-15)
- PATENT ABSTRACTS OF JAPAN vol. 1997, no. 07, 31. Juli 1997 (1997-07-31) & JP 09 072635 A (IZUMI GIKEN), 18. März 1997 (1997-03-18)

## Beschreibung

### Stand der Technik

Die Erfindung betrifft ein Filterelement, insbesondere ein Luftentölelement, zur Abscheidung einer Flüssigkeit mit einem Drainagerohr durch welches die abgeschiedene Flüssigkeit entfernt werden kann, nach dem Oberbegriff des Patentanspruches 1.

Weiterhin ist eine das Drainagerohr enthaltende Drainageeinrichtung sowie eine Filtereinrichtung unter Schutz gestellt.

Filterelemente nach dem Oberbegriff sind allgemein zugänglicher Stand der Technik (siehe JP 07217577). Sie werden beispielsweise zur Entölung von Druckluft in Druckluftsystemen verwendet, die durch einen ölgeschmierten Kompressor gespeist werden. Eine andere Anwendungsmöglichkeit ist die Entölung von Kurbelgehäusegasen einer Brennkraftmaschine. Bei Filterelementen, die von Innen nach Außen durchströmt werden, sammelt sich die abgeschiedene Flüssigkeit im Inneren der Filterpatrone, welche bevorzugt zylindrisch ausgeführt ist. Von dort wird sie mit Hilfe eines Drainagerohres abgesaugt, welches in das Innere der Filterpatrone hineinreicht. Dieses Drainagerohr kann integraler Bestandteil der oberen Endscheibe des Filterelementes sein, so dass eine Fixierung in der für die Absaugung notwendigen Lage möglich ist. Jedoch ist ein Filterelement mit fest eingebautem Drainagerohr umständlich in der Herstellung, weswegen das Filterelement wenig wirtschaftlich ist.

Aufgabe der Erfindung ist es daher ein Filterelement mit Drainagerohr zu schaffen, welches kostengünstig in der Herstellung ist. Diese Aufgabe wird durch die Merkmale des Patentanspruches 1 gelöst.

### Vorteile der Erfindung

Das erfindungsgemäße Filterelement ist dadurch gekennzeichnet, dass das Drainagerohr mit Hilfe eines Verbinders in der oberen Endscheibe fixiert werden kann. Drainagerohr und Verbinder bilden zusammen die Drainageeinrichtung, die als gesondertes Bauteil hergestellt werden kann. Die Verbindung mit der Endscheibe ist bevorzugt lösbar ausgeführt, wodurch das Drainagerohr bei einem Wechsel des Filterelementes entfernt und in das neue Filterelement eingesetzt werden kann. Dadurch lassen sich die Ersatzteile kostengünstiger herstellen, da die Drainageeinrichtung mehrfach verwendet werden kann.

Die Drainageeinrichtung selbst kann ein Standardbauteil sein, welches gemäß einer besonderen Ausgestaltung der Erfindung mit Schnappnasen als Verbinder ausgestattet ist. Diese lassen sich beispielsweise in Kunststoff einteilig herstellen, weswegen sich die Drainageeinrichtung kostengünstig herstellen läßt. Entsprechende Aufnahmen für die Verbinder in der Endscheibe lassen sich bei der Gestaltung als Schnappnasen ebenfalls einfach zum Beispiel durch fensterförmige Öffnungen realisieren.

Die Bezeichnung der Verbindungselemente am Drainagerohr sowie an der Endscheibe des Filterelementes sollen jedoch nicht als Beschränkung verstanden werden, dass schnappnasenförmige Bauteile lediglich am Drainagerohr vorgesehen sein können. Die Schnappnasen können auch als Aufnahme bezeichnet werden, wobei der Verbinder dann eine entsprechende Einrichtung zum Halten der Schnappnasen an der Drainageeinrichtung ist.

Gemäß einer vorteilhaften Ausgestaltung kann das Drainagerohr mit dem Verbinder einteilig ausgeführt werden. Diese einteilige Drainageeinrichtung läßt sich dann kostengünstig herstellen, zum Beispiel mit Hilfe des Spritzgussverfahrens in Kunststoff. Hierdurch können weitere Kosten eingespart werden. Eine andere vorteilhafte Ausgestaltung sieht jedoch vor, dass der Verbinder mit einem Rohransatz versehen wird, welcher einen Teil des Drainagerohrs bildet, welcher aber andererseits eine Steckverbindung mit dem eigentlichen Drainagerohr ermöglicht. Hierbei steht der modulare Gedanke im Vordergrund, durch den sich ebenfalls Kosten einsparen lassen. Das Basisbauteil, welches aufgrund seiner geometrischen Struktur zum Beispiel im Spritzgießverfahren hergestellt werden muss, besteht dann aus dem Verbinder mit dem Rohransatz. Dieses kann für alle Größen von Filterelementen Verwendung finden, da durch die Anpassung der Länge des zugehörigen Drainagerohrs eine Applikation an alle Anwendungen erfolgen kann. Das Drainagerohr selbst besteht aus einem Halbzeug, nämlich einem Rohr, welches zum Beispiel durch Strangpressen gewonnen werden kann. Hierbei handelt es sich daher um ein außerordentlich günstiges Bauteil. Damit lassen sich die Kosten für die Lagerhaltung durch wenige Grundbauteile für alle Varianten vermindern.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die erfindungsgemäße Filtereinrichtung im Mittelschnitt,
- Figur 2: eine besondere Ausgestaltung der Drainageeinrichtung im Schnitt und
- Figur 3: einen Deckel, in den die Drainageeinrichtung gemäß Figur 2 eingesteckt werden kann, als Aufsicht.

### Beschreibung der Ausführungsbeispiele

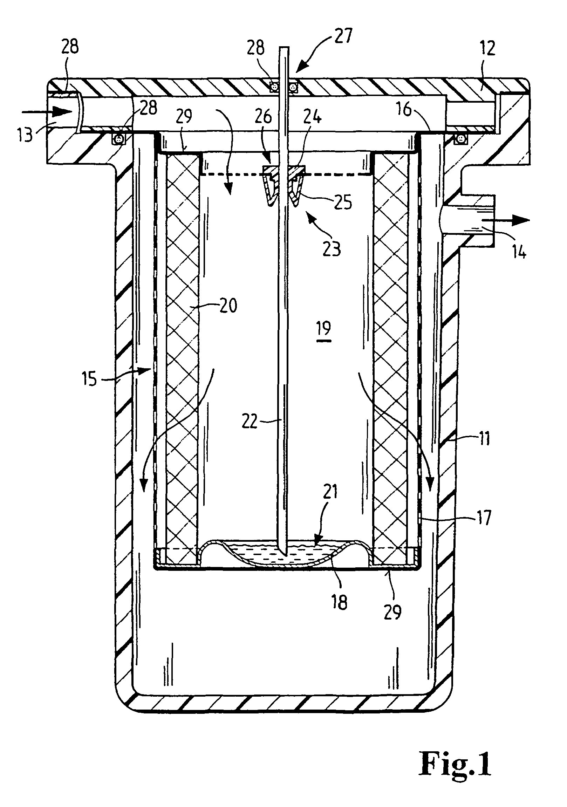

Die Filtereinrichtung gemäß Figur 1 weist ein Gehäuse 11 mit einem Deckel 12 auf wobei durch das Gehäuse ein Einlaß 13 und ein Auslaß 14 für das zu filternde Fluid, insbesondere ein Gas, gebildet ist. Zwischen Gehäuse 11 und Deckel 12 ist ein Filterelement 15 mit einer oberen Endscheibe 16 mittels einer Klemmverbindung gehalten. Das Filterelement 15 weist weiterhin einen Stützkörper 17 und eine untere Endscheibe 18 auf.

Der Weg des zu filternden Gases ist durch Pfeile angedeutet. Er reicht vom Einlaß 13 durch nicht dargestellte Öffnungen in der oberen Endscheibe 16 in einen Innenraum 19 des Filterelementes 15 hinein, von wo aus der Gasstrom durch ein Filtermedium 20 und den ebenfalls durchlässigen Stützkörper 17 zum Auslaß 14 geleitet wird. Dabei sammelt sich in einer Vertiefung 21 der unteren Endscheibe 18 die abgeschiedene Flüssigkeit, welche durch ein Drainagerohr 22 aus dem Innenraum 19 herausgesogen werden kann.

Das Drainagerohr 22 ist Teil einer Drainageeinrichtung 23, welche unter anderem auch einen Verbinder 24 mit Schnappnasen 25 aufweist. Der Verbinder ist also als stopfenförmiges Bauteil ausgestaltet, welches in eine lochförmige Aufnahme 26 in der Endscheibe gesteckt werden kann. Der Verbinder ist auf das Drainagerohr 22 gesteckt und mit diesem verklebt. Zur Dichtung des Drainagerohrs an einem Durchgang 27 im Deckel 12 sowie zur Dichtung zwischen Deckel 12 und Gehäuse 11 werden Dichtringe 28 verwendet. Eine Abdichtung des Filtermediums erfolgt durch Einkleben von dessen Stirnseiten 29 in entsprechende Absätze der oberen und unteren Endscheibe 16, 18.

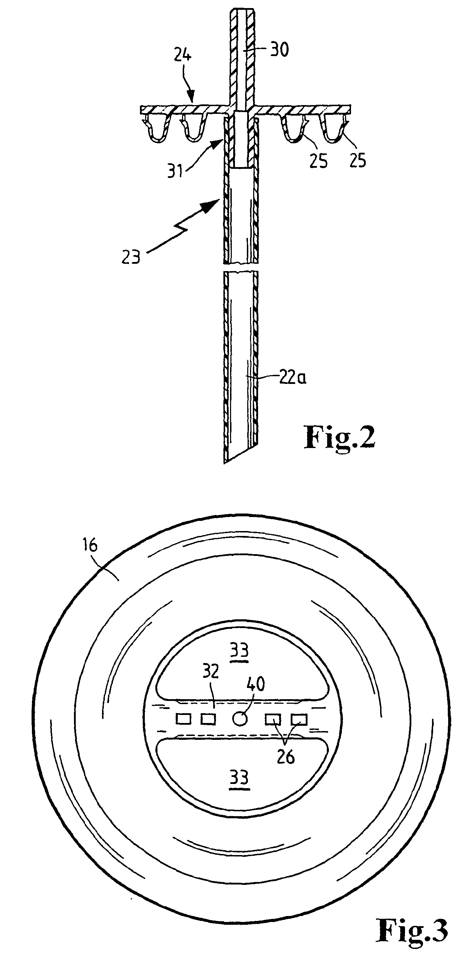

In Figur 2 ist eine alternative Ausgestaltung der Drainageeinrichtung 23 dargestellt. Der Verbinder 24 weist einen Rohransatz 30 auf, welcher entsprechend dem Drainagerohr gemäß Figur 1 als Anschluß beispielsweise für einen Schlauch zum Absaugen der abgeschiedenen Flüssigkeit dient. Dieser Verbinder ist als Grundbauteil zu verstehen, und kann für Filterelemente unterschiedlicher Abmessung verwendet werden. Weiterhin ist an dem Verbinder eine Steckverbindung 31 realisiert, mit deren Hilfe das eigentliche Drainagerohr 22a mit dem Verbinder verbunden werden kann. Das Drainagerohr 22a besteht aus einem Standard-Halbzeug in Form eines Rohres und wird von diesem abgelenkt. Auf diese Weise ist die Länge des Drainagerohres frei wählbar und optimal auf den aktuellen Anwendungsfall anzupassen.

Eine obere Endscheibe 16, die die Drainageeinrichtung 23 aufnehmen kann, ist in Figur 3 dargestellt. Zu erkennen ist ein Steg 32, der eine Durchlassöffnung 33 für das zu filternde Fluid (diejenige welche in Figur 1 nicht dargestellt ist) überspannt. In diesen Steg läßt sich die Drainageeinrichtung 23 in eine Mittelbohrung 40 einsetzen. Dabei dienen Fensterförmige Aufnahmen 26 zur Fixierung der Schnappnasen 25 gemäß Figur 2. Von den Schnappnasen 25 sowie den zugehörigen Aufnahmen 26 sind vier Stück in Reihe angeordnet. Hierdurch läßt sich eine zuverlässige Fixierung erzielen. Außerdem ist eine zuverlässige Halterung der Drainageeinrichtung auch noch möglich, wenn eine der Schnappnasen abbrechen sollte.

Als alternatives Verbindungsverfahren für die in Figur 1 und 2 dargestellte Schnappverbindung sind selbstverständlich auch andere Verbindungsverfahren denkbar. Bei gleichen Werkstoffen der Drainageeinrichtung und der Endscheibe läßt sich zum Beispiel eine Schweißverbindung denken. Eine weitere Möglichkeit ist eine Klebeverbindung. Anstelle der Schnappnasen können beispielsweise andere Verbinder zur Herstellung lösbarer Verbindungen verwendet werden, wie zum Beispiel Muttern und Schrauben. Auch eine Nietverbindung ist denkbar. Zuletzt sei noch die Möglichkeit einer reibschlüssigen oder kraftschlüssigen Verbindung genannt, zum Beispiel durch einen Pressverband. Hierdurch kann auch eine Abdichtung erreicht werden.

## Patentansprüche

1. Filterelement, insbesondere Luftentölelement, zur Abscheidung von einer Flüssigkeit, aufweisend ein ringförmig geschlossenes Filtermedium (20), welches an deren Stirnseiten (29) mit Endscheiben versehen ist, von denen eine untere Endscheibe (18) einen durch das Filtermedium gebildeten Innenraum (19) abschließt, in den ein Drainagerohr (22, 22a) hineinragt, welches durch die obere Endscheibe (16) geführt ist, **dadurch gekennzeichnet, dass** das Drainagerohr mit einem Verbinder (24) ausgestattet ist, mit dessen Hilfe es an der oberen Endscheibe in einer dafür vorgesehenen Aufnahme (25) befestigt werden kann, wobei Drainagerohr und Verbinder eine Drainageeinrichtung bilden.

2. Filterelement nach Anspruch 1, **dadurch gekennzeichnet, dass** die Verbindung zwischen oberer Endscheibe (16) und dem Drainagerohr (22, 22a) lösbar ausgeführt ist.

3. Drainageeinrichtung für ein Filterelement nach Anspruch 2, **dadurch gekennzeichnet, dass** der Verbinder mindestens eine Schnappnase (25) aufweist.

4. Drainageeinrichtung für ein Filterelement nach einem der vorherigen Ansprüche, **dadurch gekennzeichnet, dass** das Drainagerohr (22, 22a) und der Verbinder (24) einteilig ausgeführt sind.

5. Drainageeinrichtung für ein Filterelement nach einem der vorherigen Ansprüche, **dadurch gekennzeichnet, dass** der Verbinder (24) mit einem Rohransatz (30) ausgestattet ist, welcher mit Hilfe einer Steckverbindung (31) mit dem Drainagerohr (22, 22a) verbunden ist.

6. Filtereinrichtung, aufweisend ein Gehäuse (11) mit einem Einlass (12) und einem Auslass (13) für das zu filternde Fluid, **dadurch gekennzeichnet, dass** ein Filterelement nach Anspruch 1 oder 2 in das Gehäuse eingebaut ist.

## Claims

1. A filter element for separating a liquid from a fluid, said filter element comprising an annular filter medium having axial end faces, and lower and upper end disks sealingly bonded to the respective axial end faces, the lower end disk closing off an interior space defined by the annular filter medium, said filter element further comprising a drainage tube which protrudes through the upper end disk into said interior space, wherein said drainage tube is provided with a connector engageable with a receiving element in the upper end disk to secure the drainage tube to the upper end disk, whereby the drainage tube and the connector form a drainage device.

2. A filter element according to claim 1, wherein said fluid is air, and said filter element is a de-oiling filter for separating entrained oil from the air.

3. A filter element according to claim 1, wherein the connector provided on the drainage tube is releasable from the upper end disk, whereby the drainage tube can be detached from the filter element.

4. A filter element according to claim 1, wherein the connector comprises at least one clip hook.

5. A filter element according to claim 1, wherein the drainage tube and the connector are constructed in one piece.

6. A filter element for separating a liquid from a fluid, said filter element comprising an annular filter medium with lower and upper end disks on respective axial end faces thereof the lower end disk closing off an interior space defined by the annular filter medium, said filter element further comprising a drainage tube which protrudes through the upper end disk into said interior space, wherein said drainage tube is provided with a connector engageable with a receiving element in the upper end disk to secure the drainage tube to the upper end disk. whereby the drainage tube and the connector form a drainage device, and wherein the connector is equipped with a tubular stem which forms a plug-in connection with the drainage tube.

7. A filter device comprising a housing with an inlet for a fluid to be filtered and an outlet for filtered fluid to be filtered, and a filter element according to claim 1 secured in said housing between said inlet and said outlet.

## Revendications

1. Elément filtrant, en particulier élément de déshuilage d'air, pour séparer un liquide, comprenant un moyen filtrant (20) annulaire fermé muni sur ses faces frontales (29) de plaques terminales dont une plaque terminale inférieure (18) enferme un espace intérieur (19) formé par le moyen filtrant dans lequel fait saillie un tube de drainage (22, 22a) guidé à travers la plaque terminale supérieure (16),
**caractérisé en ce que**
le tube de drainage est doté d'un raccord (24) à l'aide duquel il peut être fixé à la plaque terminale supérieure dans un logement (25) prévu à cet effet, le tube de drainage et le raccord formant un dispositif de drainage.

2. Elément filtrant selon la revendication,
**caractérisé en ce que**
la liaison entre la plaque terminale supérieure (16) et le tube de drainage (22, 22a) est amovible.

3. Dispositif de drainage pour un élément filtrant selon la revendication 2,
**caractérisé en ce que**
le raccord présente au moins un ressort à déclic (25).

4. Dispositif de drainage pour un élément filtrant selon l'une quelconque des revendications précédentes,
**caractérisé en ce que**
le tube de drainage (22, 22a) et le raccord (24) sont fabriqués d'une seule pièce.

5. Dispositif de drainage pour un élément filtrant selon l'une quelconque des revendications précédentes,
**caractérisé en ce que**
le raccord (24) est muni d'un manchon (30) relié au tube de drainage (22, 22a) à l'aide d'une connexion à emboîter (31).

6. Dispositif de filtre, comprenant un boîtier (11) avec une entrée (12) et une sortie (13) pour le fluide à filtrer,
**caractérisé en ce qu'**
un élément filtrant selon la revendication 1 ou 2 est monté dans le boîtier.
